# EUROPEAN PATENT APPLICATION

(11) **EP 4 518 480 A1**
(43) Date of publication of application: **05.03.2025**
(21) Application number: 22939397.0
(22) Date of filing: 29.04.2022
(51) Int. Cl.: H04W 72/04, H04L 5/00

(54) **METHOD AND APPARATUS FOR TRANSMITTING SIDELINK DATA, AND READABLE STORAGE MEDIUM**

(71) Applicant: Beijing Xiaomi Mobile Software Co., Ltd., Beijing 100085 (CN)
(72) Inventor: ZHAO, Qun, Beijing 100085 (CN); ZHAO, Wensu, Beijing 100085 (CN)
(74) Representative: Dehns Germany Partnerschaft mbB
(86) International application number: PCT/CN2022/090709
(87) International publication number: WO 2023/206551

(57) **Abstract**

The present disclosure is applied to the technical field of wireless communications. Provided are a method and apparatus for transmitting sidelink data, and a readable storage medium. The method comprises: determining the value of N, wherein N is the number of frequency-domain resource units to be determined of a user equipment on a transmission frequency band, the transmission frequency band is located in an unlicensed frequency band, and the transmission frequency band comprises M listen-before-talk (LBT) sub-bands; determining a frequency-domain resource in the transmission frequency band according to a frequency-domain resource position of at least one LBT sub-band, wherein the frequency-domain resource comprises N frequency-domain resource units, and the number of LBT sub-bands occupied by the frequency-domain resource is less than or equal to M; and transmitting sidelink data on the frequency-domain resource. In the present disclosure, when a frequency-domain resource in a transmission frequency band is determined, the influence of the number of occupied LBT sub-bands is taken into consideration, and it can be determined that the frequency domain resource occupies different numbers of LBT sub-bands, so as to meet different sidelink data transmission requirements.

## Description

### TECHNICAL FIELD

The present disclosure relates to the field of wireless communication technology, in particular, to a method and an apparatus for transmitting sidelink data, and a readable storage medium.

### BACKGROUND

In some wireless communication systems, such as new radio (NR) systems, communication in a sidelink (SL, also known as a direct link) between user equipment (UE) is supported, and enhanced communication in the sidelink can be further supported.

The communication in some sidelinks can only be conducted on a licensed spectrum and a dedicated spectrum, and cannot be conducted on a shared spectrum (also known as an unlicensed spectrum). If the communication in the sidelink is required on the shared spectrum, it needs to meet the occupied bandwidth (OCB) requirements stipulated. For example, in some regions, relevant rules stipulate that when user equipment uses certain unlicensed spectrum for data transmission, the occupied bandwidth (the bandwidth including 99% signal power) must reach 80% -100% of the nominal bandwidth.

It is necessary to consider improving the transmission performance of the communication in the sidelink on the shared spectrum by user equipment.

### SUMMARY

The present disclosure provides a method and an apparatus for transmitting sidelink data, and a readable storage medium.

The first aspect provides a method for transmitting sidelink data, which is performed by user equipment. The method includes:
determining a value of N configured to indicate a number of frequency-domain resource units to be determined by the user equipment within a transmission band, wherein the transmission band is located within an unlicensed frequency band, and includes M Listen Before Talk (LBT) subbands, where N and M are integers greater than 1;
determining a frequency-domain resource within the transmission band based on a position of the frequency-domain resource located within at least one of the LBT subbands, wherein the frequency-domain resource includes N frequency-domain resource units, and a number of LBT subbands occupied by the frequency-domain resource is less than or equal to M; and
transmitting the sidelink data over the frequency-domain resource.

According to the method, when determining the frequency-domain resource within the transmission band, the impact from the number of occupied LBT subbands is taken into account, so that the frequency-domain resource occupying different numbers of LBT subbands can be determined, to meet different requirements for sidelink data transmission. A small number of LBT subbands occupied by the frequency-domain resource can reduce the LBT failure probability, while a large number of LBT subbands occupied by the frequency-domain resource allows the time-frequency resources to be evenly distributed throughout the entire communication frequency band, thereby reducing the interference.

In some embodiments, determining the frequency-domain resource within the transmission band based on the position of the frequency-domain resource located within the at least one of the LBT subbands, includes:
determining N frequency-domain resource units, located within the same LBT subband within the transmission band, as the frequency-domain resource.

In some embodiments, determining N frequency-domain resource units, located within the same LBT subband within the transmission band, as the frequency-domain resource, includes:
determining a first set, wherein the first set includes multiple candidate resources, the candidate resource includes N frequency-domain resource units, and the N frequency-domain resource units in the candidate resource belong to the same LBT subband; and
determining one or more of the multiple candidate resources in the first set as the frequency-domain resource.

In some embodiments, determining the frequency-domain resource within the transmission band based on the position of the frequency-domain resource located within the at least one of the LBT subbands, includes:
determining a second set, wherein the second set includes multiple candidate resources, the candidate resource includes N frequency-domain resource units, and the multiple candidate resources include both at least one candidate resource occupying one LBT subband and at least one candidate resource occupying more than one LBT subband;
performing a resource exclusion on the second set based on sidelink control information (SCI) received in channel monitoring and a sidelink RSRP measurement result associated with the SCI, wherein
a first candidate resource occupying one LBT subband is excluded from the second set, wherein a time-frequency resource indicated or reserved by the SCI coincides with the first candidate resource, and an associated sidelink RSRP measurement result is higher than a first threshold; and
a second candidate resource occupying more than one LBT subband is excluded from the second set, wherein the time-frequency resource indicated or reserved by the SCI coincides with the second candidate resource, and the associated sidelink RSRP measurement result is higher than a second threshold;
determining a third set, wherein the third set includes a candidate resource remaining in the second set after the first candidate resource and/or the second candidate resource are/is excluded; and
determining the frequency-domain resource from the third set;
the first threshold is greater than the second threshold.

In some embodiments, the method further includes:
determining the second threshold based on a number of the LBT subbands occupied by the second candidate resource.

In some embodiments, a number of the LBT subbands occupied by the second candidate resource is negatively correlated with the second threshold.

In some embodiments, the method further includes:
determining the second threshold based on a protocol; or receiving downlink control configuration information sent by a network device, wherein the downlink control configuration information includes a value indicating the second threshold.

In some embodiments, determining the frequency-domain resource within the transmission band based on the position of the frequency-domain resource located within the at least one of the LBT subbands, includes:
determining a second set, wherein the second set includes multiple candidate resources, each candidate resource includes N frequency-domain resource units, and the multiple candidate resources include both at least one candidate resource occupying one LBT subband and at least one candidate resource occupying more than one LBT subband;
performing a resource exclusion on the second set based on sidelink control information (SCI) received in channel monitoring and a sidelink RSRP measurement result associated with the SCI, wherein
a third candidate resource is excluded from the second set, wherein a time-frequency resource indicated or reserved by the SCI coincides with the third candidate resource, and an associated sidelink RSRP measurement result is higher than a third threshold;
determining a third set, wherein the third set includes a candidate resource remaining in the second set after the third candidate resource is excluded;
in response to a number of candidate resources in the third set being less than a fourth threshold, performing following operations at least once, or repeating the following operations until a number of candidate resources in a fourth set is not less than a fifth threshold:
determining a sixth threshold, wherein the sixth threshold is greater than the sixth threshold in a previous cycle and greater than the third threshold;
excluding a first candidate resource occupying one LBT subband from the second set, wherein the time-frequency resource indicated or reserved by the SCI coincides with a fourth candidate resource, and an associated sidelink RSRP measurement result is higher than the sixth threshold; and
excluding the first candidate resource from the second set, wherein the time-frequency resource indicated or reserved by the SCI coincides with a fifth candidate resource occupying more than one LBT subband in the second set, and an associated sidelink RSRP measurement result is higher than the third threshold;
determining the fourth set, wherein the fourth set includes a candidate resource remaining in the second set after the fourth candidate resource and/or the fifth candidate resource are/is excluded; and
determining the frequency-domain resource from the fourth set.

In some embodiments, determining the frequency-domain resource within the transmission band based on the position of the frequency-domain resource located within the at least one of the LBT subbands, includes:
determining a first set, wherein the first set includes multiple candidate resources, the candidate resource includes N frequency-domain resource units, and the N frequency-domain resource units in the candidate resource belong to the same LBT subband;
performing a resource exclusion on the first set based on sidelink control information (SCI) received in channel monitoring and a sidelink RSRP measurement result associated with the SCI, wherein
a fifth candidate resource occupying one LBT subband is excluded from the first set, wherein a time-frequency resource indicated or reserved by the SCI coincides with the fifth candidate resource, and an associated sidelink RSRP measurement result is higher than a seventh threshold;
determining a fifth set, wherein the fifth set includes a candidate resource remaining in the first set after the resource exclusion is performed;
in response to a number of candidate resources in the fifth set being less than an eighth threshold, determining a second set, wherein the second set includes multiple candidate resources, the candidate resource includes N frequency-domain resource units, and the multiple candidate resources include both at least one candidate resource occupying one LBT subband and at least one candidate resource occupying more than one LBT subband;
performing a resource exclusion on the fifth set based on sidelink control information (SCI) received in channel monitoring and a sidelink RSRP measurement result associated with the SCI;
determining a sixth set, wherein the sixth set includes a candidate resource remaining in the second set after the resource exclusion is performed; and
determining the frequency-domain resource from the sixth set.

In some embodiments, determining the frequency-domain resource within the transmission band based on the position of the frequency-domain resource located within the at least one of the LBT subbands, includes:
determining a seventh set, wherein the seventh set includes multiple candidate resources, each candidate resource includes N frequency-domain resource units, and the N frequency-domain resource units in each candidate resource belong to K LBT subbands, where K is an integer less than M, and wherein a time-frequency resource corresponding to SCI does not have overlapping regions with any candidate resource in the seventh set; and
determining the candidate resource(s) in the seventh set as the frequency-domain resource.

In some embodiments, the method further includes:
determining K based on a protocol, or receiving downlink control signaling sent by a network device, wherein the downlink control signaling includes information indicating K.

In some embodiments, the method further includes receiving high-level signaling sent by a network device, wherein the high-level signaling includes information indicating N.

The second aspect provides a communication apparatus. The communication apparatus can be used to execute the steps executed by the user equipment in the first aspect or any possible design of the first aspect described in the above. The user equipment can achieve various functions in the above methods through hardware structures, software modules, or a combination of hardware structures and software modules.

When implementing the communication apparatus shown in the first aspect through software modules, the communication apparatus can include:
a processing module configured to determine a value of N configured to indicate a number of frequency-domain resource units to be determined by user equipment within a transmission band, wherein the transmission band is located within an unlicensed frequency band, and includes M Listen Before Talk (LBT) subbands, where N and M are integers greater than 1, and further configured to determine a frequency-domain resource within the transmission band based on a position of the frequency-domain resource located within at least one of the LBT subbands, wherein the frequency-domain resource includes N frequency-domain resource units, and a number of LBT subbands occupied by the frequency-domain resource is less than or equal to M; and
a transceiver module configured to transmit the sidelink data over the frequency-domain resource.

The third aspect provides a communication device including a processor and a memory. The memory is configured to store a computer program. The processor is configured to execute the computer program to implement the second aspect or any possible design of the second aspect.

The fourth aspect provides a computer-readable storage medium, which stores instructions (or computer programs, programs). When the instructions are called and executed on a computer, cause the computer to implement the first aspect or any possible design of the first aspect as described above.

### BRIEF DESCRIPTION OF THE DRAWINGS

The drawings described here are used to provide further understanding of embodiments of the present disclosure and constitute a part of the present disclosure. Those illustrative embodiments of the present disclosure and descriptions thereof are used to explain the embodiments of the present disclosure and do not impose undue limitations on the present disclosure.

The drawings, which are incorporated in and constitute a part of this specification, illustrate embodiments consistent with the present disclosure and serve together with the specification to explain principles of the present disclosure.
FIG. 1 is a schematic diagram of an architecture of a wireless communication system according to one or more embodiments of the present disclosure;
FIG. 2 is a schematic diagram of a position of an IRB in a shared subband according to one or more embodiments of the present disclosure;
FIG. 3 is a schematic diagram of a position of an IRB in a shared subband according to one or more embodiments of the present disclosure;
FIG. 4 is a schematic diagram of a position of an IRB in a shared subband according to one or more embodiments of the present disclosure;
FIG. 5 is a schematic diagram of a position of an IRB in a shared subband according to one or more embodiments of the present disclosure;
FIG. 6 is an interactive schematic diagram of a method for transmitting sidelink data according to one or more embodiments of the present disclosure;
FIG. 7 is an interactive schematic diagram of a method for transmitting sidelink data according to one or more embodiments of the present disclosure;
FIG. 8 is a flowchart of a method for transmitting sidelink data according to one or more embodiments of the present disclosure;
FIG. 9 is a structural diagram of an apparatus for transmitting sidelink data according to one or more embodiments of the present disclosure;
FIG. 10 is a structural diagram of a device for transmitting sidelink data according to one or more embodiments of the present disclosure;
FIG. 11 is a structural diagram of an apparatus for a network device according to one or more embodiments of the present disclosure;
FIG. 12 is a structural diagram of an apparatus for a network device according to one or more embodiments of the present disclosure.

### DETAILED DESCRIPTION

Further explanations of embodiments of the present disclosure will be provided with reference to the drawings and the detailed descriptions.

Embodiments of the present disclosure will be described in detail here, with examples shown in the drawings. When referring to the drawings, unless otherwise indicated, the same numbers in different drawings represent the same or similar elements. The embodiments described in the following do not represent all embodiments consistent with the present disclosure. On the contrary, the embodiments are only examples of devices and methods consistent with some aspects of the present disclosure as described in the appended claims.

The terms used in embodiments of the present disclosure are only for the purpose of describing specific embodiments and are not intended to limit the present disclosure. The singular forms such as "a" and "the" used in embodiments of the present disclosure and the appended claims are also intended to include plural forms, unless the context clearly indicates otherwise. It should also be understood that the term "and/or" used in the present disclosure refers to and includes any or all possible combinations of one or more associated items listed.

It should be understood that although terms such as first, second, third, etc. may be used to describe various information in embodiments of the present disclosure, the information should not be limited to these terms. These terms are only used to distinguish information of the same type from each other. For example, without departing from the scope of the present disclosure, the first information can also be referred to as the second information, and similarly, the second information can also be referred to as the first information. The word "if" used herein can be interpreted as "when", "while", or "in response to a determination that", depending on the context.

Embodiments of the present disclosure will be described in detail in the following, the examples of which are shown in the drawings, where the same or similar reference numerals throughout indicate the same or similar elements. The embodiments described in the following with reference to the drawings are exemplary and intended to explain the present disclosure, and should not be construed as limiting the present disclosure.

In order to better understand the method and the apparatus for selecting sidelink communication resources according to embodiments of the present disclosure, the communication system applicable to the embodiments of the present disclosure will be described in the following first.

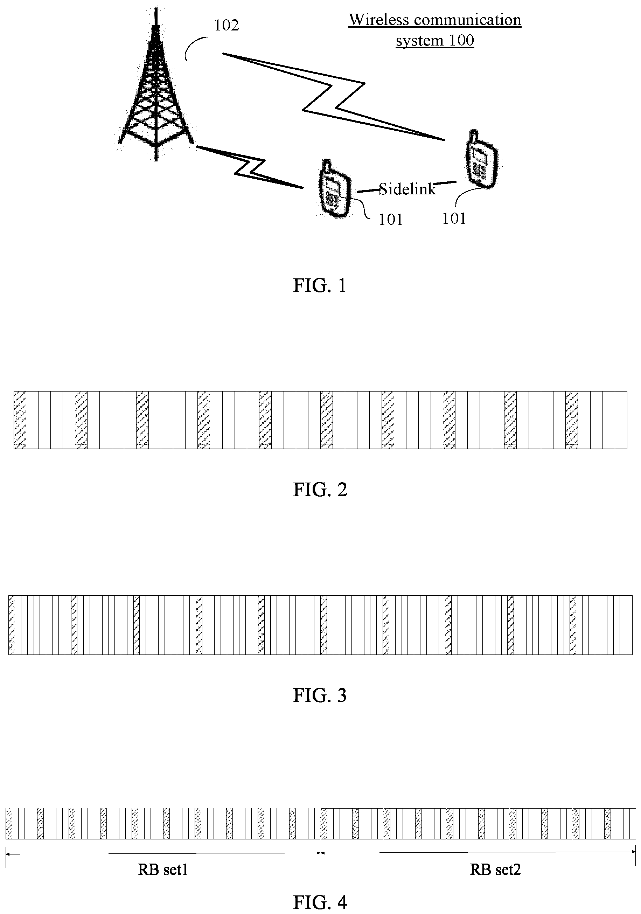

As shown in FIG. 1, in a scene where the sidelink communication is carried out between user equipment 101, a network device configures various transmission parameters for data transmission for user equipment 101. One of the user equipment 101 serves as a data sender, and the other of the user equipment 101 serves as a data receiver. The two user equipment directly communicate with each other. The links between the network device and the user equipment 101 for communication are uplink and downlink, and the link between user equipment 101 is the sidelink.

It can be understood that the wireless communication system shown in FIG. 1 is only for illustrative purposes. The wireless communication system can also include other network devices, such as core network devices, wireless relay devices, and wireless backhaul devices, which are not shown in FIG. 1. Embodiments of the present disclosure do not limit the number of network devices and the number of user equipment included in the wireless communication system.

It can be further understood that the wireless communication system in embodiments of the present disclosure is a network that provides wireless communication functionality. The wireless communication system can adopt different communication technologies, such as Code Division Multiple Access (CDMA), Wideband Code Division Multiple Access (WCDMA), Time Division Multiple Access (TDMA), Frequency Division Multiple Access (FDMA), Orthogonal Frequency Division Multiple Access (OFDMA), Single Carrier Frequency Division Multiple Access (SC-FDMA), and Carrier Sense Multiple Access with Collision Avoidance. According to various factors such as the capacity, the rate, and the latency of different networks, the networks can be divided into 4G networks or future evolved networks, for example, 5G networks. The 5G network can also be referred to as the New Radio (NR) network. For ease of description, the wireless communication networks in embodiments of the present disclosure are referred to as networks for short.

In some embodiments, the network device involved in the present disclosure can also be referred to as a wireless access network device. The wireless access network device can be a base station, an evolved node B (eNB), a home base station, an access point (AP) in a wireless fidelity (WIFI) system, a wireless relay node, a wireless backhaul node, a transmission point (TP), or a transmission and reception point (TRP), etc. The network device can also be a gNB in the NR system, or a component or some devices that constitute the base station. When it refers to a Vehicle to Everything (V2X) communication system, the network device can also be a vehicle mounted device. It should be understood that the specific technology and the specific form of the device adopted by the network device are not limited in embodiments of the present disclosure.

In some embodiments, the user equipment involved in the present disclosure, which can also be referred to a mobile station (MS), a mobile terminal (MT), etc., is a device that provides voice and/or data connectivity to users. For example, the user equipment can be a handheld device, a vehicle mounted device, etc., with wireless connectivity. In some embodiments, some examples of the user equipment include mobile phones, pocket personal computers (PPC), handheld computers, personal digital assistants (PDA), laptops, tablets, wearable devices, or onboard devices, etc. In some embodiments, when it refers to a Vehicle to Everything (V2X) communication system, the user equipment can also be a vehicle mounted device. It should be understood that the specific technology and the specific form of the device adopted by the user equipment are not limited in embodiments of the present disclosure.

It can be understood that the communication system described in embodiments of the present disclosure is for the purposes of providing clearer explanations of the technical solutions of the embodiments of the present disclosure, and does not impose a limitation on the technical solutions of the embodiments of the present disclosure. Those of ordinary skill in the art know that with the evolution of system architectures and the emergence of new business scenes, the technical solutions provided in the embodiments of the present disclosure are also applicable to similar technical problems.

In order to support the user equipment in NR to transmit data on the shared spectrum, the concept of an interleaved resource block (IRB) can be defined to meet the OCB requirements stipulated.

In some embodiments, as shown in FIG. 2, for a shared subband of 20MHz and for a subcarrier spacing (SCS) of 30KHz, there are a total of 50 PRBs included in this shared subband. Each IRB includes 10 discontinuous PRBs, and two adjacent PRBs within the same IRB are 5 PRBs apart from each other. The shared subband includes 5 IRBs, which are numbered in increasing frequency order as 0, 1, 2, 3, 4. If the user equipment uses the IRB for data transmission, the OCB requirements can be met.

In some embodiments, as shown in FIG. 3, for a shared subband of 20MHz and for a subcarrier spacing (SCS) of 15KHz, there are a total of 100 PRBs included in this shared subband. Each IRB includes 10 discontinuous PRBs, and two adjacent PRBs within the same IRB are 10 PRBs apart from each other. The shared subband includes 10 IRBs, which are numbered in increasing frequency order as 0, 1, ... , 9. If the user equipment uses the IRB for data transmission, the OCB requirements can be met.

The bandwidth for the sidelink communication using shared spectrum can include multiple Listen Before Talk (LBT) subbands. For example, a bandwidth of 80MHz includes 4 LBT subbands of 20MHz for communication.

When the user equipment selects resources for the sidelink communication in the case of multiple communication bandwidths, both time-frequency resources distributed within the same LBT subband and across multiple LBT subbands can be selected.

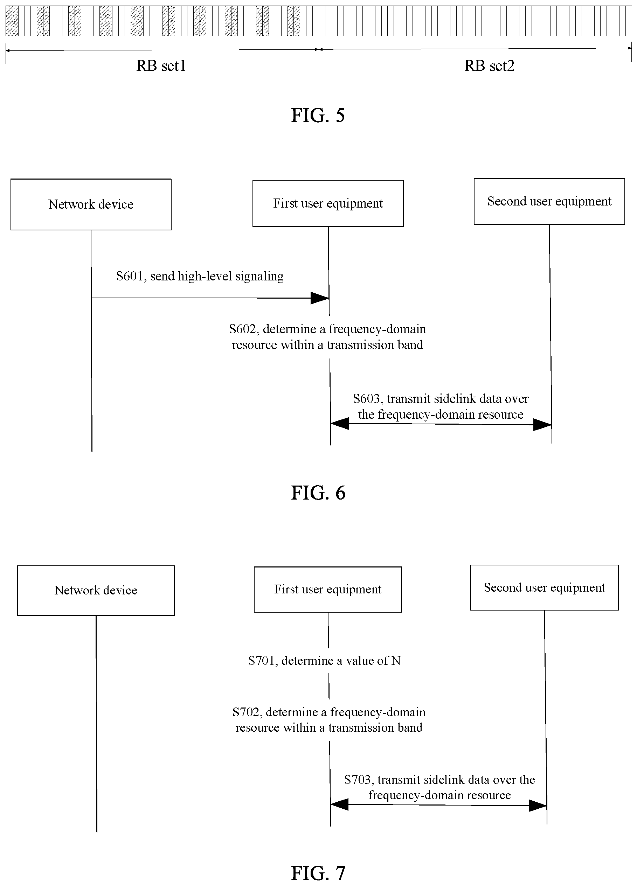

In some embodiments, one RB set corresponds to one shared subband of 20MHz. When the SCS is 30KHz, one shared subband of 20MHz includes a total of 50 PRBs, and one IRB can include 10 discontinuous PRBs. If the user equipment needs to select 2 IRBs for PSCCH/PSSCH transmission, the user equipment can select 1 IRB in RB set1 and 1 IRB in RB set2 each as the time-frequency resource for transmission, as shown in FIG. 4, or the user equipment can select 2 IRBs in RB set1 as the time-frequency resource for transmission, as shown in FIG. 5.

In some embodiments, when the user equipment uses multiple LBT subbands for transmission, the LBT detection needs to be performed on each LBT subband. If the LBT failure probability when the user equipment uses time-frequency resources belonging to multiple LBT subbands is a first probability, and the LBT failure probability when the user equipment uses time-frequency resources belonging to a single LBT subband is a second probability, then the first probability will be significantly higher than the second probability. Therefore, when selecting resources, the user equipment tends to select time-frequency resources within a single LBT subband as much as possible to reduce the LBT failure probability.

Embodiments of the present disclosure provide a method for transmitting sidelink data. FIG. 6 is a flowchart of a method for transmitting sidelink data according to one or more embodiments of the present disclosure. As shown in FIG. 6, the method includes steps S601-S603.

In step S601, a network device sends high-level signaling to first user equipment.

The high-level signaling sent by the network device to the first user equipment includes information indicating N, and N is configured to indicate a number of frequency-domain resource units to be determined by the first user equipment within a transmission band. After receiving and parsing the high-level signaling, the first user equipment can obtain the value of N, that is, the first user equipment can obtain the number of frequency-domain resource units to be determined within the transmission band.

In some embodiments, the transmission band is located within an unlicensed frequency band, and the transmission band includes M LBT subbands, where N and M are integers greater than 1. The frequency-domain resource units can be IRBs, PRBs, or resource blocks corresponding to sub channels.

In step S602, the first user equipment determines a frequency-domain resource within a transmission band.

When determining the frequency-domain resource within the transmission band, the first user equipment can determine the frequency-domain resource within the transmission band based on a position of the frequency-domain resource that is located within at least one LBT subband. The determined frequency-domain resource includes N frequency-domain resource units, and the number of LBT subbands occupied by the frequency-domain resource is less than or equal to M.

In some embodiments, when the number of LBT subbands occupied by the frequency-domain resource is less than M, the number of LBT detections can be reduced. The less the number of LBT subbands occupied by the frequency-domain resource is, the fewer LBT detections is made, then the lower the LBT failure probability will be resulted.

When the number of LBT subbands occupied by the frequency-domain resource is equal to M, the time-frequency resources to be used are evenly distributed throughout the entire communication frequency band, with less interference between the time-frequency resources.

In step S603, the first user equipment transmits sidelink data over the frequency-domain resource.

The first user equipment can send data to second user equipment over the frequency-domain resource, or receive data sent by the second user equipment over the frequency-domain resource.

In embodiments of the present disclosure, when determining the frequency-domain resource within the transmission band, the impact from the number of occupied LBT subbands is taken into account, so that the frequency-domain resource occupying different numbers of LBT subbands can be determined, to meet different requirements for sidelink data transmission. A small number of LBT subbands occupied by the frequency-domain resource can reduce the LBT failure probability, while a large number of LBT subbands occupied by the frequency-domain resource allows the time-frequency resources to be evenly distributed throughout the entire communication frequency band, thereby reducing the interference.

Embodiment of the present disclosure provide a method for transmitting sidelink data. FIG. 7 is a flowchart of a method for transmitting sidelink data according to one or more embodiments of the present disclosure. As shown in FIG. 7, the method includes steps S701-S703.

In step S701, first user equipment determines a value of N.

In some embodiments, N is configured to indicate a number of frequency-domain resource units to be determined by the first user equipment within a transmission band. The value of N can be a default fixed value, or a value determined by the first user equipment based on an agreed protocol. After determining the value of N, the first user equipment can obtain the number of frequency-domain resource units to be determined within the transmission band.

In step S702, the first user equipment determines a frequency-domain resource within a transmission band.

In some embodiments, the determining of the frequency-domain resource within the transmission band by the first user equipment in S702 is the same as that in S602, and will not be repeated here.

In step S703, the first user equipment transmits sidelink data over the frequency-domain resource.

In some embodiments, the transmitting of the sidelink data by the first user equipment over the frequency-domain resource in S703 is the same as that in S603, and will not be repeated here.

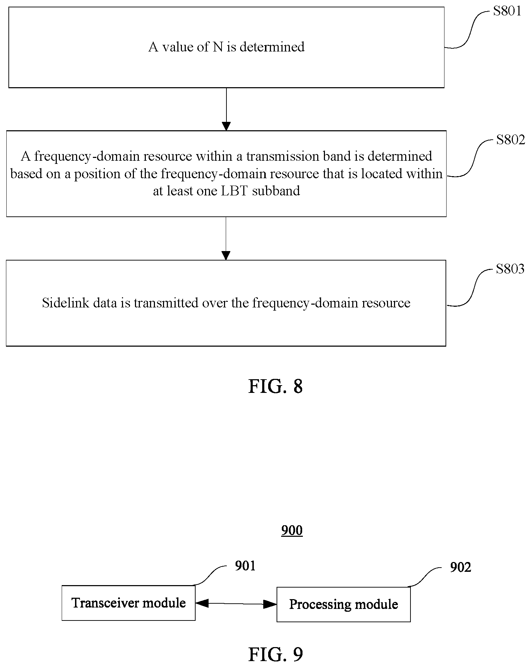

Embodiment of the present disclosure provide a method for transmitting sidelink data, and the method is performed by first user equipment. FIG. 8 is a flowchart of a method for transmitting sidelink data according to one or more embodiments of the present disclosure. As shown in FIG. 8, the method includes steps S801-S803.

In step S801, a value of N is determined.

In some embodiments, N is configured to indicate a number of frequency-domain resource units to be determined by the user equipment within a transmission band. The transmission band is located within an unlicensed frequency band, which includes M Listen Before Talk (LBT) subbands, where N and M are integers greater than 1. The frequency-domain resource units can be IRBs, PRBs, or resource blocks corresponding to sub channels.

In some embodiments, when the transmission band has a bandwidth of 40MHz and M is 2, the transmission band includes 2 LBT subbands, and when the value of N is 2, the user equipment needs to select 2 IRBs within the transmission band.

In step S802, a frequency-domain resource within a transmission band is determined based on a position of the frequency-domain resource that is located within at least one LBT subband.

In some embodiments, the frequency-domain resource includes N frequency-domain resource units, and the number of LBT subbands occupied by the frequency-domain resource is less than or equal to M.

In step S803, sidelink data is transmitted over the frequency-domain resource, and the process ends.

According to step S802 of the method, it is important to refer to the position of the frequency-domain resource that is located within the at least one LBT subband when determining the frequency-domain resource within the transmission band, so that the frequency-domain resource that meets different requirements for sidelink data transmission can be determined.

Methods for determining the frequency-domain resource within the transmission band will be described in the following embodiments.

### Embodiment one

The method for determining the frequency-domain resource within the transmission band includes: determining N frequency-domain resource units, which are located within the same LBT subband within the transmission band, as the frequency-domain resource.

In some embodiments, a first set is first determined, and then one or more candidate resources in the first set are determined as the frequency-domain resource.

In some embodiments, the first set includes only candidate resources located within the same LBT subband. In some embodiments, the first set includes multiple candidate resources, the candidate resource includes N frequency-domain resource units, and the N frequency-domain resource units in the candidate resource belong to the same LBT subband.

In some embodiments, when determining one candidate resource in the first set as the frequency-domain resource, the determined one candidate resource is used for one transmission.

In some embodiments, when determining multiple candidate resources in the first set as the frequency-domain resource, the determined multiple candidate resources are used for repeated transmissions, and the number of the determined multiple candidate resources corresponds to the number of the repeated transmissions.

According embodiments of the present disclosure, N frequency-domain resource units located within the same LBT subband are selected as the frequency-domain resource, so that the frequency-domain resource can be within the same LBT subband, and the transmission on only one single LBT subband can be achieved, which can reduce the number of LBT detections, save power consumption, and lower the LBT failure probability.

### Embodiment two

Determining the frequency-domain resource within the transmission band based on the position of the frequency-domain resource that is located within at least one LBT subband includes following steps.

In step S1, a second set is determined.

In some embodiments, the second set includes not only candidate resources located within the same LBT subband, but also candidate resources located within different LBT subbands. In some embodiments, the second set includes multiple candidate resources, each of the multiple candidate resources includes N frequency-domain resource units. At least one candidate resource out of the multiple candidate resources occupies one LBT subband, and at least one candidate resource out of the multiple candidate resources occupies more than one LBT subband.

In step S2, a resource exclusion is performed on the second set based on sidelink control information (SCI) received in channel monitoring and a sidelink RSRP measurement result associated with the SCI.

In some embodiments, when a time-frequency resource indicated or reserved by the SCI coincides with a first candidate resource occupying one LBT subband in the second set, and the associated sidelink RSRP measurement result is higher than a first threshold, the first candidate resource is excluded from the second set.

In some embodiments, when a time-frequency resource indicated or reserved by the SCI coincides with a second candidate resource occupying more than one LBT subband in the second set, and the associated sidelink RSRP measurement result is higher than a second threshold, the second candidate resource is excluded from the second set.

In some embodiments, the first threshold is greater than the second threshold, so that the threshold corresponding to the first candidate resource belonging to the same LBT subband is greater than the threshold corresponding to the second candidate resource belonging to different LBT subbands, thereby allowing the second candidate resource belonging to different LBT subbands to be easier to be excluded and the first candidate resource located in the same LBT subband to be retained as much as possible.

In some embodiments, determining the second threshold can be achieved based on any of following embodiments.

In some embodiments, the second threshold is determined based on a number of LBT subbands occupied by the second candidate resource. In some embodiments, the number of the LBT subbands occupied by the second candidate resource is negatively correlated with the second threshold. In some embodiments, the greater the number of the LBT subbands occupied by the second candidate resource is, the less the second threshold is, that is, the more LBT subbands the second candidate resource spans, the less the second threshold is, so that the second candidate resource can be easier to be excluded.

In some embodiments, the number of the LBT subbands occupied by the second candidate resource being negatively correlated with the second threshold includes:
when the number of the LBT subbands occupied by the second candidate resource is 1, the corresponding threshold is T;
when the number of the LBT subbands occupied by the second candidate resource is 2, the corresponding threshold is T-t;
when the number of the LBT subbands occupied by the second candidate resource is 3, the corresponding threshold is T-2t;
where t is a fixed step, also known as an offset.

In some embodiments, the value of the sidelink RSRP (S-RSRP) threshold is determined based on the number of RB sets to which the candidate resource belongs. For example, the threshold for the candidate resource belonging to one RB set is TH1, the threshold for the candidate resource belonging to two RB sets is TH1-offset, and the threshold for the candidate resource belonging to three RB sets is TH1-2*offset.

In some embodiments, the second threshold is determined based on an agreed protocol.

In some embodiments, the second threshold is determined by receiving downlink control configuration information sent by the network device, and the downlink control configuration information includes a value indicating the second threshold.

In step S3, a third set is determined.

In some embodiments, the third set includes the candidate resource(s) remaining in the second set after the first candidate resource and/or the second candidate resource are/is excluded from the second set.

In step S4, the frequency-domain resource is determined from the third set.

According embodiments of the present disclosure, the second set is used as an initialized set, and some of the candidate resources are excluded from the second set. Different thresholds are used for exclusion of candidate resources located in the same LBT subband and candidate resources located in different LBT subbands, so as to prioritize the exclusion of candidate resources located in different LBT subbands and retain candidate resources located in the same LBT subband as much as possible, thereby reducing the number of LBT detections, saving power consumption, and lowering the LBT failure probability.

### Embodiment three

Determining the frequency-domain resource within the transmission band based on the position of the frequency-domain resource that is located within at least one LBT subband includes following steps.

In step S-1, a second set is determined.

In some embodiments, the second set includes multiple candidate resources, each of the multiple candidate resources includes N frequency-domain resource units. At least one candidate resource out of the multiple candidate resources occupies one LBT subband, and at least one candidate resource out of the multiple candidate resources occupies more than one LBT subband.

In step S-2, a resource exclusion is performed on the second set based on sidelink control information (SCI) received in channel monitoring and a sidelink RSRP measurement result associated with the SCI.

In some embodiments, when a time-frequency resource indicated or reserved by the SCI coincides with a third candidate resource in the second set, and the associated sidelink RSRP measurement result is higher than a third threshold, the third candidate resource is excluded from the second set.

In step S-3, a third set is determined.

In some embodiments, the third set includes the candidate resource(s) remaining in the second set after the third candidate resource is excluded from the second set.

In step S-4, when a number of candidate resources in the third set is less than a fourth threshold, following operations are performed at least once; alternatively, when a number of candidate resources in the third set is less than a fourth threshold, following operations are repeated until a number of candidate resources in a fourth set is not less than a fifth threshold.

In some embodiments, determining a sixth threshold, the sixth threshold being greater than a sixth threshold in a previous cycle of operations and greater than the third threshold; when a time-frequency resource indicated or reserved by the SCI coincides with a fourth candidate resource occupying one LBT subband in the second set, and the associated sidelink RSRP measurement result is higher than a sixth threshold, excluding the first candidate resource from the second set; and when a time-frequency resource indicated or reserved by the SCI coincides with a fifth candidate resource occupying more than one LBT subband in the second set, and the associated sidelink RSRP measurement result is higher than the third threshold, excluding the first candidate resource from the second set.

In step S-5, a fourth set is determined.

In some embodiments, the fourth set includes the candidate resource(s) remaining in the second set after the fourth candidate resource and/or the fifth candidate resource are/is excluded from the second set.

In step S-6, the frequency-domain resource is determined from the fourth set.

According embodiments of the present disclosure, the threshold used for exclusion of the candidate resource can be adjusted dynamically, while ensuring the number (greater than a minimum number) of candidate resources included in the fourth set, so that the fourth set used for selection of the frequency-domain resource is more reasonable.

### Embodiment four

Determining the frequency-domain resource within the transmission band based on the position of the frequency-domain resource that is located within at least one LBT subband includes following steps.

In step S1', a first set is determined.

In some embodiments, the first set includes multiple candidate resources, each of the multiple candidate resources includes N frequency-domain resource units, and the N frequency-domain resource units in the candidate resource belong to the same LBT subband.

In step S2', a resource exclusion is performed on the first set based on sidelink control information (SCI) received in channel monitoring and a sidelink RSRP measurement result associated with the SCI.

In some embodiments, when a time-frequency resource indicated or reserved by the SCI coincides with a fifth candidate resource occupying one LBT subband in the first set, and the associated sidelink RSRP measurement result is higher than a seventh threshold, the fifth candidate resource is excluded from the first set.

In step S3', a fifth set is determined. In some embodiments, the fifth set includes the candidate resource(s) remaining in the first set after the resource exclusion is performed on the first set.

In step S4', when a number of candidate resources in the fifth set is less than an eighth threshold, a second set is determined.

In some embodiments, the second set includes multiple candidate resources, each of the multiple candidate resources includes N frequency-domain resource units. At least one candidate resource out of the multiple candidate resources occupies one LBT subband, and at least one candidate resource out of the multiple candidate resources occupies more than one LBT subband.

In step S5', a resource exclusion is performed on the fifth set based on sidelink control information (SCI) received in channel monitoring and a sidelink RSRP measurement result associated with the SCI.

In some embodiments, different thresholds are used.

In some embodiments, when a time-frequency resource indicated or reserved by the SCI coincides with a first candidate resource occupying one LBT subband in the second set, and the associated sidelink RSRP measurement result is higher than a nine threshold, the first candidate resource is excluded from the second set.

In some embodiments, when a time-frequency resource indicated or reserved by the SCI coincides with a second candidate resource occupying more than one LBT subband in the second set, and the associated sidelink RSRP measurement result is higher than a tenth threshold, the second candidate resource is excluded from the second set.

In some embodiments, the same threshold is used.

In some embodiments, when a time-frequency resource indicated or reserved by the SCI coincides with a first candidate resource occupying one LBT subband in the second set, and the associated sidelink RSRP measurement result is higher than an eleventh threshold, the first candidate resource is excluded from the second set.

In some embodiments, when a time-frequency resource indicated or reserved by the SCI coincides with a second candidate resource occupying more than one LBT subband in the second set, and the associated sidelink RSRP measurement result is higher than the eleventh threshold, the second candidate resource is excluded from the second set.

In step S6', a sixth set is determined. In some embodiments, the sixth set includes the candidate resource(s) remaining in the second set after the resource exclusion is performed on the second set.

In step S7', the frequency-domain resource is determined from the sixth set.

According embodiments of the present disclosure, candidate resources located in the same LBT subband can be selected as much as possible, while ensuring the number (greater than a minimum number) of candidate resources included in the fourth set.

### Embodiment five

Determining the frequency-domain resource within the transmission band based on the position of the frequency-domain resource that is located within at least one LBT subband includes following steps.

In step S~1, a seventh set is determined.

In some embodiments, the seventh set includes multiple candidate resources, and each of the multiple candidate resources includes N frequency-domain resource units. The N frequency-domain resource units corresponding to each candidate resource belong to K LBT subbands, where K is an integer less than M. The time-frequency resources corresponding to the SCI do not have overlapping regions with any of the candidate resources in the seventh set.

In step S~2, the candidate resource(s) in the seventh set is(are) determined as the frequency-domain resource.

In some embodiments, the method for determining K can be achieved as follows:
determining K based on an agreed protocol, or receiving downlink control signaling sent by the network device, the downlink control signaling including information indicating K.

In some embodiments, high-level signaling sent by the network device is received, the high-level signaling including information indicating N.

According embodiments of the present disclosure, N frequency-domain resource units corresponding to each candidate resource are limited to only K LBT subbands, and K is limited to be less than M, thereby reducing the number of LBT subbands occupied by the frequency-domain resource, reducing the number of LBT detections, saving power consumption, and reducing the LBT failure probability.

Based on the same concept as the above method embodiments, embodiments of the present disclosure also provide a communication apparatus that can achieve the functions of the user equipment 101 in the above method embodiments and be used to execute the steps executed by the user equipment 101 in the above embodiments. The functions can be implemented through hardware, or software, or by executing corresponding software through the hardware. The hardware or software includes one or more modules corresponding to the above functions.

In some embodiments, the communication apparatus 900 shown in FIG. 9 can be applied in the user equipment 101 involved in the above method embodiments, and execute the steps performed by the user equipment 101 in the above method embodiments.

The communication apparatus 900 includes a transceiver module 901 and a processing module 902.

In some embodiments, the processing module 902 is configured to determine a value of N configured to indicate a number of frequency-domain resource units to be determined by user equipment within a transmission band, the transmission band being located within an unlicensed frequency band, and including M Listen Before Talk (LBT) subbands, where N and M are integers greater than 1, and in some embodiments, the processing module 902 is further configured to determine a frequency-domain resource within the transmission band based on a position of the frequency-domain resource located within at least one of the LBT subbands, the frequency-domain resource including N frequency-domain resource units, and a number of LBT subbands occupied by the frequency-domain resource being less than or equal to M.

The transceiver module 901 is configured to transmit sidelink data over the frequency-domain resource.

In some embodiments, the transceiver module 901 is configured to receive high-level signaling sent by the network device, which includes information indicating N. N is configured to indicate a number of frequency-domain resource units to be determined by the user equipment within a transmission band. The transmission band is located within an unlicensed frequency band, which includes M Listen Before Talk (LBT) subbands, where N and M are integers greater than 1.

The processing module 902 is configured to determine a frequency-domain resource within the transmission band based on a position of the frequency-domain resource located within at least one of the LBT subbands. The frequency-domain resource includes N frequency-domain resource units, and the number of LBT subbands occupied by the frequency-domain resources is less than or equal to the M.

The transceiver module 901 is further configured to transmit the sidelink data over the frequency-domain resource.

In some embodiments, processing module 902 is further configured to determine N frequency-domain resource units, which are located within the same LBT subband within the transmission band, as the frequency-domain resource.

In some embodiments, the processing module 902 is further configured to: determine a first set, the first set including multiple candidate resources, the candidate resource including N frequency-domain resource units, and the N frequency-domain resource units in the candidate resource belonging to the same LBT subband; and determine one or more of the multiple candidate resources in the first set as the frequency-domain resource.

In some embodiments, the processing module 902 is further configured to: determine a second set, the second set including multiple candidate resources, the candidate resource including N frequency-domain resource units, and the multiple candidate resources including both at least one candidate resource occupying one LBT subband and at least one candidate resource occupying more than one LBT subband; perform a resource exclusion on the second set based on sidelink control information (SCI) received in channel monitoring and a sidelink RSRP measurement result associated with the SCI, wherein a first candidate resource occupying one LBT subband is excluded from the second set, with a time-frequency resource indicated or reserved by the SCI coinciding with the first candidate resource, and an associated sidelink RSRP measurement result being higher than a first threshold; and a second candidate resource occupying more than one LBT subband is excluded from the second set, with the time-frequency resource indicated or reserved by the SCI coinciding with the second candidate resource, and the associated sidelink RSRP measurement result being higher than a second threshold; determine a third set, the third set including a candidate resource remaining in the second set after the first candidate resource and/or the second candidate resource are/is excluded; and determine the frequency-domain resource from the third set.

In some embodiments, the first threshold is greater than the second threshold.

In some embodiments, the processing module 902 is further configured to determine the second threshold based on a number of the LBT subbands occupied by the second candidate resource.

In some embodiments, the number of the LBT subbands occupied by the second candidate resource is negatively correlated with the second threshold.

In some embodiments, the processing module 902 is further configured to determine the second threshold based on a protocol.

In some embodiments, the transceiver module 902 is further configured to receive downlink control configuration information sent by a network device, the downlink control configuration information including a value indicating the second threshold.

In some embodiments, the processing module 902 is further configured to: determine a second set, the second set including multiple candidate resources, each candidate resource including N frequency-domain resource units, and the multiple candidate resources including both at least one candidate resource occupying one LBT subband and at least one candidate resource occupying more than one LBT subband; perform a resource exclusion on the second set based on sidelink control information (SCI) received in channel monitoring and a sidelink RSRP measurement result associated with the SCI, wherein a third candidate resource is excluded from the second set, with a time-frequency resource indicated or reserved by the SCI coinciding with the third candidate resource, and an associated sidelink RSRP measurement result being higher than a third threshold; determine a third set, the third set including a candidate resource remaining in the second set after the third candidate resource is excluded; in response to a number of candidate resources in the third set being less than a fourth threshold, perform following operations at least once, or repeat the following operations until a number of candidate resources in a fourth set is not less than a fifth threshold: determine a sixth threshold, the sixth threshold being greater than the sixth threshold in a previous cycle and greater than the third threshold; exclude a first candidate resource occupying one LBT subband from the second set, with the time-frequency resource indicated or reserved by the SCI coinciding with a fourth candidate resource, and an associated sidelink RSRP measurement result being higher than the sixth threshold; and exclude the first candidate resource from the second set, with the time-frequency resource indicated or reserved by the SCI coinciding with a fifth candidate resource occupying more than one LBT subband in the second set, and an associated sidelink RSRP measurement result being higher than the third threshold; determine the fourth set, the fourth set including a candidate resource remaining in the second set after the fourth candidate resource and/or the fifth candidate resource are/is excluded; and determine the frequency-domain resource from the fourth set.

In some embodiments, the processing module 902 is further configured to: determine a first set, the first set including multiple candidate resources, the candidate resource including N frequency-domain resource units, and the N frequency-domain resource units in the candidate resource belonging to the same LBT subband; perform a resource exclusion on the first set based on sidelink control information (SCI) received in channel monitoring and a sidelink RSRP measurement result associated with the SCI, wherein a fifth candidate resource occupying one LBT subband is excluded from the first set, with a time-frequency resource indicated or reserved by the SCI coinciding with the fifth candidate resource, and an associated sidelink RSRP measurement result being higher than a seventh threshold; determine a fifth set, the fifth set including a candidate resource remaining in the first set after the resource exclusion is performed; in response to a number of candidate resources in the fifth set being less than an eighth threshold, determine a second set, the second set including multiple candidate resources, the candidate resource including N frequency-domain resource units, and the multiple candidate resources including both at least one candidate resource occupying one LBT subband and at least one candidate resource occupying more than one LBT subband; perform a resource exclusion on the fifth set based on sidelink control information (SCI) received in channel monitoring and a sidelink RSRP measurement result associated with the SCI; determine a sixth set, the sixth set including a candidate resource remaining in the second set after the resource exclusion is performed; and determine the frequency-domain resource from the sixth set.

In some embodiments, the processing module 902 is further configured to: determine a seventh set, the seventh set including multiple candidate resources, each candidate resource including N frequency-domain resource units, and the N frequency-domain resource units in each candidate resource belonging to K LBT subbands, where K is an integer less than M, and a time-frequency resource corresponding to SCI not having overlapping regions with any candidate resource in the seventh set; and determine the candidate resource(s) in the seventh set as the frequency-domain resource.

In some embodiments, the processing module 902 is further configured to: determine K based on a protocol, or receive downlink control signaling sent by a network device, the downlink control signaling including information indicating K.

In some embodiments, the transceiver module is further configured to receive high-level signaling sent by a network device, the high-level signaling including information indicating N.

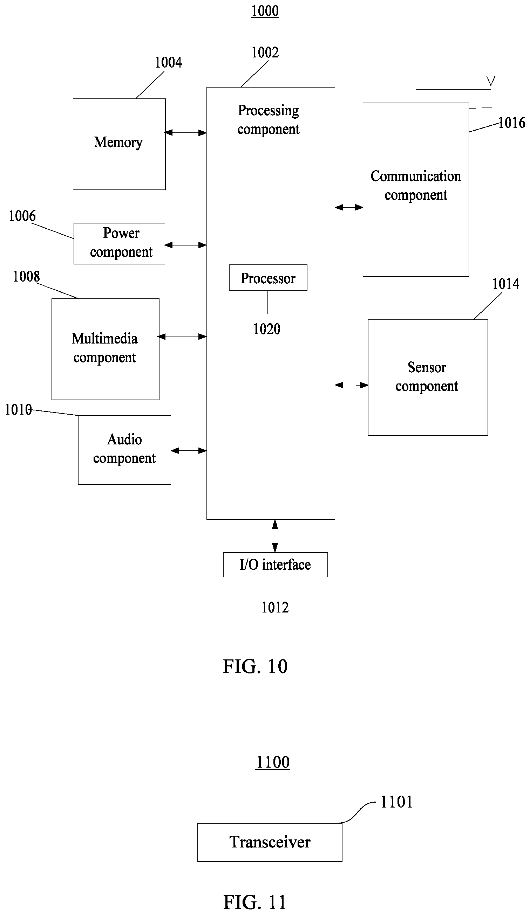

When a communication device is the user equipment 101, the structure of the communication device can also be as shown in FIG. 10.

As shown in FIG. 10, the device 1000 can be, for example, a mobile phone, a computer, a digital broadcasting terminal, a messaging device, a game console, a tablet device, a medical device, a fitness device, a personal digital assistant, etc.

As shown in FIG. 10, the device 1000 can include one or more of the following components: a processing component 1002, a memory 1004, a power component 1006, a multimedia component 1008, an audio component 1010, an input/output (I/O) interface 1012, a sensor component 1014, and a communication component 1016.

The processing component 1002 typically controls the overall operation of the device 1000, such as operations associated with display, telephone call, data communication, camera operation, and recording operations. The processing component 1002 may include one or more processors to execute instructions to complete all or part of the methods described above. In addition, the processing component 1002 may include one or more modules to facilitate interactions between the processing component 1002 and other components. For example, the processing component 1002 may include a multimedia module to facilitate interaction between the multimedia component 1008 and the processing component 1002.

The memory 1004 is configured to store various types of data to support operations in the device 1000. Examples of such data include instructions, contact data, phone book data, messages, pictures, videos, and the like for any application or method operating on the device 1000. The memory 1004 can be implemented by any type of volatile or non-volatile storage device or their combination, such as static random access memory (SRAM), electrically erasable programmable read-only memory (EEPROM), erasable programmable read-only memory (EPROM), programmable read-only memory (PROM), read-only memory (ROM), magnetic memory, flash memory, disk or optical disk.

The power component 1006 provides power for various components of the device 1000. The power component 1006 may include a power management system, one or more power supplies, and other components associated with generating, managing, and distributing power for the device 1000.

The multimedia component 1008 includes a display screen providing an output interface between the device 1000 and the user. In some embodiments, the screen may include a liquid crystal display (LCD) and a touch panel (TP). If the screen includes a touch panel, the screen can be implemented as a touch screen to receive input signals from the user. The touch panel includes one or more touch sensors to sense touch, sliding, and gestures on the touch panel. The touch sensor can not only sense the boundaries of touch or sliding actions, but also detect the duration and pressure related to the touch or sliding operation. In some embodiments, the multimedia component 1008 includes a front camera and/or a rear camera. When the device 1000 is in operation mode, such as shooting mode or video mode, the front camera and/or rear camera can receive external multimedia data. Each front camera and rear camera can be a fixed optical lens system or have focal length and optical zoom capability.

The audio component 1010 is configured to output and/or input audio signals. For example, the audio component 1010 includes a microphone (MIC), which is configured to receive an external audio signal when the device 1000 is in an operation mode, such as a calling mode, a recording mode, and a voice recognition mode. The received audio signal may be further stored in memory 1004 or transmitted via communication component 1016. In some embodiments, the audio component 1010 also includes a speaker for outputting audio signals.

The I/O interface 1012 provides an interface between the processing component 1002 and peripheral interface modules, which can be a keyboard, click wheel, button, etc. These buttons may include, but are not limited to, a Home button, a Volume button, a Start button, and a Lock button.

The sensor component 1014 includes one or more sensors for providing various aspects of condition evaluation for the device 1000. For example, the sensor component 1014 can detect an open/closed state of the device 1000, relative positioning of the components. The component is, for example, a display and a keypad of the device 1000. The sensor component 1014 can also detect changes in the position of the device 1000 or one component of the device 1000, presence or absence of the user's contact with the device 1000, orientation or acceleration/deceleration of the device 1000 and temperature change of the device 1000. The sensor component 1014 may include a proximity sensor configured to detect the presence of nearby objects without any physical contact. The sensor component 1014 may also include a light sensor, such as a CMOS or CCD image sensor, for use in imaging applications. In some embodiments, the sensor component 1014 may also include an acceleration sensor, a gyroscope sensor, a magnetic sensor, a pressure sensor, or a temperature sensor.

The communication component 1016 is configured to facilitate wired or wireless communication between the device 1000 and other devices. The device 1000 can access wireless networks based on communication standards, such as WiFi, 4G or 5G, or a combination thereof. In some embodiments, the communication component 1016 receives a broadcast signal or broadcast related information from an external broadcast management system via a broadcast channel. In some embodiments, the communication component 1016 also includes a near field communication (NFC) module to facilitate short range communication. For example, the NFC module can be implemented based on radio frequency identification (RFID) technology, infrared data association (IrDA) technology, ultra wideband (UWB) technology, Bluetooth (BT) technology and other technologies.

In some embodiments, the device 1000 can be implemented through one or more application specific integrated circuits (ASIC), digital signal processors (DSP), digital signal processing devices (DSPD), programmable logic devices (PLD), field programmable gate arrays (FPGA), controllers, microcontrollers, microprocessors, or other electronic components, for implementing above methods.

In some embodiments, a non-transitory computer-readable storage medium including instructions is also provided, for example, a memory 1004 including instructions, which can be executed by a processor of the device 1000 to complete above methods. For example, the non-transitory computer-readable storage medium can be ROM, random access memory (RAM), CD-ROM, tapes, floppy disks, optical data storage devices, etc.

Based on the same concept as the above method embodiments, embodiments of the present disclosure also provide a communication apparatus that can achieve the functions of the network device 102 in the above method embodiments and be used to execute the steps executed by the network device 102 in the above embodiments. The functions can be implemented through hardware, or software, or by executing corresponding software through the hardware. The hardware or software includes one or more modules corresponding to the above functions.

In some embodiments, the communication apparatus 1100 shown in FIG. 11 can be applied in the network device involved in the above method embodiments, and execute the steps performed by the network device 102 in the above method embodiments. As shown in FIG. 11, the communication apparatus 1100 can include a transceiver module 1101 and a processing module. The transceiver module 1101 can be used to support communication by the communication apparatus 1100. The transceiver module 1101 can have wireless communication functions, such as wireless communication with other communication devices through a wireless air interface.

When executing the steps implemented by the network device 102, the transceiver module 1101 is configured to send high-level signaling to the user equipment, which includes information indicating N. The N is configured to indicate the number of frequency-domain resource units to be determined by the user equipment within the transmission band. The transmission band is located within an unlicensed frequency band.

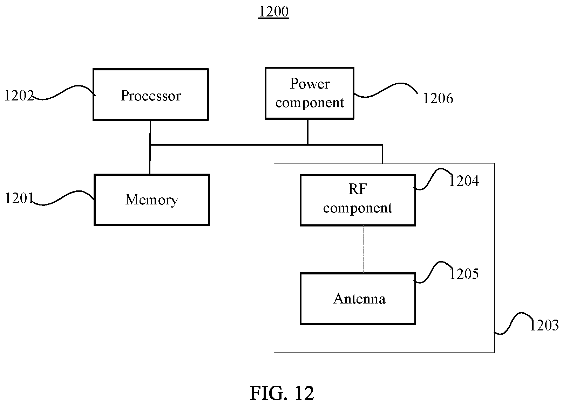

When a communication device is the network device 102, the structure of the communication device can also be as shown in FIG. 12. As shown in FIG. 12, the device 1200 includes a memory 1201, a processor 1202, a transceiver component 1203, and a power component 1206. In some embodiments, the memory 1201 is coupled to the processor 1202 and can be used to store the necessary programs and data for the communication device 1200 to implement various functions. The processor 1202 is configured to support the communication device 1200 to perform the corresponding functions in the above method embodiments, which can be achieved by calling the programs stored in the memory 1201. The transceiver component 1203 can be a wireless transceiver, which can be used to support the communication device 1200 to receive signaling and/or data, as well as to send signaling and/or data, through the wireless air interface. The transceiver component 1203 can also be referred to as a transceiver unit or a communication unit. The transceiver component 1203 can include a radio frequency component 1204 and one or more antennas 1205. The radio frequency component 1204 can be a remote radio unit (RRU), and is specifically used for transmitting radio frequency signals and achieving conversion between radio frequency signals and baseband signals. The one or more antennas 1205 can be used for radiating and receiving radio frequency signals.

When the communication device 1200 needs to send data, the processor 1202 can perform baseband processing on the data to be sent and output the baseband signal to the RF unit. The RF unit processes the baseband signal and sends it in the form of electromagnetic waves through the antenna. When data is sent to the communication device 1200, the RF unit receives the RF signal through the antenna, converts the RF signal into the baseband signal, and outputs the baseband signal to the processor 1202. The processor 1202 converts the baseband signal into data and processes the data.

After considering the specification and practices of the invention disclosed herein, those skilled in the art will easily come up with other implementation solutions of the present disclosure. The present disclosure aims to cover any variations, uses, or adaptive changes of the present disclosure, which follow the general principles of the present disclosure and include common knowledge or commonly used technical means in the art that are not disclosed in the present disclosure. The specification and embodiments are only considered exemplary, and the true scope and spirit of the present disclosure are defined by appended claims.

It should be understood that embodiments of the present disclosure are not limited to the precise structure described above and shown in the drawings, and various modifications and changes can be made without departing from its scope. The scope of the present disclosure is limited only by the appended claims.

### Industrial applicability

When determining the frequency-domain resources within the transmission band, the impact from the number of occupied LBT subbands is taken into account, so that the frequency-domain resources occupying different numbers of LBT subbands can be determined, to meet different requirements for sidelink data transmission.

## Claims

1. A method for transmitting sidelink data, performed by user equipment, the method comprising:
determining a value of N configured to indicate a number of frequency-domain resource units to be determined by the user equipment within a transmission band, wherein the transmission band is located within an unlicensed frequency band, and comprises M Listen Before Talk (LBT) subbands, where N and M are integers greater than 1;
determining a frequency-domain resource within the transmission band based on a position of the frequency-domain resource located within at least one of the LBT subbands, wherein the frequency-domain resource comprises N frequency-domain resource units, and a number of LBT subbands occupied by the frequency-domain resource is less than or equal to M; and
transmitting the sidelink data over the frequency-domain resource.

2. The method according to claim 1, wherein determining the frequency-domain resource within the transmission band based on the position of the frequency-domain resource located within the at least one of the LBT subbands, comprises:
determining N frequency-domain resource units, located within a same LBT subband within the transmission band, as the frequency-domain resource.

3. The method according to claim 2, wherein determining N frequency-domain resource units, located within the same LBT subband within the transmission band, as the frequency-domain resource, comprises:
determining a first set, wherein the first set comprises multiple candidate resources, a candidate resource comprises N frequency-domain resource units, and the N frequency-domain resource units in the candidate resource belong to the same LBT subband; and
determining one or more of the multiple candidate resources in the first set as the frequency-domain resource.

4. The method according to claim 1, wherein determining the frequency-domain resource within the transmission band based on the position of the frequency-domain resource located within the at least one of the LBT subbands, comprises:
determining a second set, wherein the second set comprises multiple candidate resources, a candidate resource comprises N frequency-domain resource units, and the multiple candidate resources comprise both at least one candidate resource occupying one LBT subband and at least one candidate resource occupying more than one LBT subband;
performing a resource exclusion on the second set based on sidelink control information (SCI) received in channel monitoring and a sidelink RSRP measurement result associated with the SCI, wherein
a first candidate resource occupying one LBT subband is excluded from the second set, wherein a time-frequency resource indicated or reserved by the SCI coincides with the first candidate resource, and an associated sidelink RSRP measurement result is higher than a first threshold; and
a second candidate resource occupying more than one LBT subband is excluded from the second set, wherein the time-frequency resource indicated or reserved by the SCI coincides with the second candidate resource, and the associated sidelink RSRP measurement result is higher than a second threshold;
determining a third set, wherein the third set comprises a candidate resource remaining in the second set after the first candidate resource and/or the second candidate resource are/is excluded; and
determining the frequency-domain resource from the third set;
wherein the first threshold is greater than the second threshold.

5. The method according to claim 4, further comprising:
determining the second threshold based on a number of the LBT subbands occupied by the second candidate resource.

6. The method according to claim 4, wherein a number of the LBT subbands occupied by the second candidate resource is negatively correlated with the second threshold.

7. The method according to claim 4, further comprising:
determining the second threshold based on a protocol; or
receiving downlink control configuration information sent by a network device, wherein the downlink control configuration information comprises a value indicating the second threshold.

8. The method according to claim 1, wherein determining the frequency-domain resource within the transmission band based on the position of the frequency-domain resource located within the at least one of the LBT subbands, comprises:
determining a second set, wherein the second set comprises multiple candidate resources, each candidate resource comprises N frequency-domain resource units, and the multiple candidate resources comprise both at least one candidate resource occupying one LBT subband and at least one candidate resource occupying more than one LBT subband;
performing a resource exclusion on the second set based on sidelink control information (SCI) received in channel monitoring and a sidelink RSRP measurement result associated with the SCI, wherein
a third candidate resource is excluded from the second set, wherein a time-frequency resource indicated or reserved by the SCI coincides with the third candidate resource, and an associated sidelink RSRP measurement result is higher than a third threshold;
determining a third set, wherein the third set comprises a candidate resource remaining in the second set after the third candidate resource is excluded;
in response to a number of candidate resources in the third set being less than a fourth threshold, performing following operations at least once, or repeating the following operations until a number of candidate resources in a fourth set is not less than a fifth threshold:
determining a sixth threshold, wherein the sixth threshold is greater than the sixth threshold in a previous cycle and greater than the third threshold;
excluding a first candidate resource occupying one LBT subband from the second set, wherein the time-frequency resource indicated or reserved by the SCI coincides with a fourth candidate resource, and an associated sidelink RSRP measurement result is higher than the sixth threshold; and
excluding the first candidate resource from the second set, wherein the time-frequency resource indicated or reserved by the SCI coincides with a fifth candidate resource occupying more than one LBT subband in the second set, and an associated sidelink RSRP measurement result is higher than the third threshold;
determining the fourth set, wherein the fourth set comprises a candidate resource remaining in the second set after the fourth candidate resource and/or the fifth candidate resource are/is excluded; and
determining the frequency-domain resource from the fourth set.

9. The method according to claim 1, wherein determining the frequency-domain resource within the transmission band based on the position of the frequency-domain resource located within the at least one of the LBT subbands, comprises:
determining a first set, wherein the first set comprises multiple candidate resources, a candidate resource comprises N frequency-domain resource units, and the N frequency-domain resource units in the candidate resource belong to a same LBT subband;
performing a resource exclusion on the first set based on sidelink control information (SCI) received in channel monitoring and a sidelink RSRP measurement result associated with the SCI, wherein
a fifth candidate resource occupying one LBT subband is excluded from the first set,
wherein a time-frequency resource indicated or reserved by the SCI coincides with the fifth candidate resource, and an associated sidelink RSRP measurement result is higher than a seventh threshold;
determining a fifth set, wherein the fifth set comprises a candidate resource remaining in the first set after the resource exclusion is performed;
in response to a number of candidate resources in the fifth set being less than an eighth threshold, determining a second set, wherein the second set comprises multiple candidate resources, the candidate resource comprises N frequency-domain resource units, and the multiple candidate resources comprise both at least one candidate resource occupying one LBT subband and at least one candidate resource occupying more than one LBT subband;
performing a resource exclusion on the fifth set based on sidelink control information (SCI) received in channel monitoring and a sidelink RSRP measurement result associated with the SCI;
determining a sixth set, wherein the sixth set comprises a candidate resource remaining in the second set after the resource exclusion is performed; and
determining the frequency-domain resource from the sixth set.

10. The method according to claim 1, wherein determining the frequency-domain resource within the transmission band based on the position of the frequency-domain resource located within the at least one of the LBT subbands, comprises:
determining a seventh set, wherein the seventh set comprises multiple candidate resources, each candidate resource comprises N frequency-domain resource units, and the N frequency-domain resource units in each candidate resource belong to K LBT subbands, where K is an integer less than M, and wherein a time-frequency resource corresponding to SCI does not have overlapping regions with any candidate resource in the seventh set; and
determining the candidate resource(s) in the seventh set as the frequency-domain resource.

11. The method according to claim 10, further comprising:
determining K based on a protocol; or
receiving downlink control signaling sent by a network device, wherein the downlink control signaling comprises information indicating K.

12. The method according to any of claims 1 to 11, further comprising:
receiving high-level signaling sent by a network device, wherein the high-level signaling comprises information indicating N.

13. An apparatus for transmitting sidelink data, comprising:
a processing module configured to determine a value of N configured to indicate a number of frequency-domain resource units to be determined by user equipment within a transmission band, wherein the transmission band is located within an unlicensed frequency band, and comprises M Listen Before Talk (LBT) subbands, where N and M are integers greater than 1, and further configured to determine a frequency-domain resource within the transmission band based on a position of the frequency-domain resource located within at least one of the LBT subbands, wherein the frequency-domain resource comprises N frequency-domain resource units, and a number of LBT subbands occupied by the frequency-domain resource is less than or equal to M; and
a transceiver module configured to transmit the sidelink data over the frequency-domain resource.

14. A communication device, comprising a processor and a memory, wherein
the memory is configured to store a computer program; and
the processor is configured to execute the computer program to implement the method according to any of claims 1 to 13.

15. A computer-readable storage medium having instructions stored thereon, which when called and executed on a computer, cause the computer to implement the method according to any of claims 1 to 13.
